# EUROPEAN PATENT APPLICATION

(11) **EP 4 586 689 A1**
(43) Date of publication of application: **16.07.2025**
(21) Application number: 23862200.5
(22) Date of filing: 25.08.2023
(51) Int. Cl.: H04W 36/14

(54) **SWITCHING PROCESSING METHOD AND APPARATUS, AND COMMUNICATION DEVICE**

(30) Priority: 09.09.2022 CN 202211104145
(71) Applicant: Datang Mobile Communications Equipment Co., Ltd., Beijing 100085 (CN)
(72) Inventor: GU, Xiaofei, Beijing 100085 (CN); CHENG, Zhimi, Beijing 100085 (CN); SONG, Yaqin, Beijing 100085 (CN)
(74) Representative: Studio Torta S.p.A.
(86) International application number: PCT/CN2023/115002
(87) International publication number: WO 2024/051504

(57) **Abstract**

A handover processing method, an apparatus and a communication device are provided. The method of an embodiment of the present disclosure includes: in a case where a first core network is not able to provide network services to a terminal, a first access network device sends a handover request to a second core network, where the handover request is configured to request a handover of the terminal's services from the first core network to the second core network; first core network and the second core network respectively include different network nodes, and each network node supports one or more of a mobility management function, a session management function, or a user plane function.

## Description

### CROSS REFERENCE OF RELATED APPLICATION

The present disclosure claims a priority of Chinese patent disclosure No. 202211104145.7 filed on September 9, 2022, which is incorporated herein by reference in its entirety.

### TECHNICAL FIELD

This disclosure relates to the field of communication technologies, and in particular, to a handover processing method, an apparatus, and a communication device.

### BACKGROUND

In the sixth-generation mobile communication technology (6G) network architecture or future network architectures, a trend is the coexistence of highly centralized and deeply distributed network forms. This means that the network will include both centralized network nodes and distributed network nodes, achieving a state where centralized and distributed network nodes coexist. When a network node (either centralized or distributed) within the core network can no longer provide network services to a terminal, how to ensure the continuity of the terminal's services is an urgent problem to be solved.

### SUMMARY

The purpose of this disclosure is to provide a handover processing method, an apparatus, and a communication device, to solve the problem of how to ensure the continuity of a terminal's services when a network node within the core network can no longer provide network services to the terminal.

To achieve the above purpose, this disclosure provides a handover processing method, including:
in a case where a first core network is not able to provide network services to a terminal, a first access network device sending a handover request to a second core network, where the handover request is configured to request a handover of the terminal's services from the first core network to the second core network;
where the first core network and the second core network respectively include different network nodes, and each network node supports one or more of a mobility management function, a session management function, or a user plane function.

Optionally, the different network nodes included in the first core network and the second core network are distributed network nodes; and/or, centralized network nodes.

Optionally, the first access network device is a target access network device of the terminal;
where the first access network device sending the handover request to the second core network includes:
obtaining, by the first access network device, related information of the terminal from a source access network device of the terminal;
sending, by the first access network device, the handover request to the second core network based on the related information of the terminal.

Optionally, the first access network device is a source access network device of the terminal;
before the first access network device sends the handover request to the second core network, the method further includes:
obtaining, by the first access network device, a first connection identifier sent by the second core network, where the first connection identifier is a connection identifier between the second core network and the first access network device;
establishing, by the first access network device, a connection with the second core network based on the first connection identifier.

Optionally, the method further includes:
sending, by the first access network device, first indication information to the terminal, where the first indication information is configured to indicate that the first core network is not able to provide network services to the terminal;
where the first access network device sending the handover request to the second core network includes:
   obtaining, by the first access network device, a first response information sent by the terminal and sending, by the first access network device, the handover request to the second core network.

Optionally, the first access network device is the source access network device of the terminal, the first response information includes related information of a second access network device, the second access network device is a target access network device of the terminal, and the second access network device is different from the first access network device;
the method further includes:
sending, by the first access network device, the related information of the terminal to the second access network device that triggers the second access network device to send the handover request to the second core network.

Optionally, after the first access network device sends the handover request to the second core network, the method further includes:
obtaining first handover acknowledgement information sent by the second core network, where the first handover acknowledgement information includes user plane function tunnel information, and the user plane function tunnel information is used for the first access network device to establish a user plane tunnel with the second core network.

Optionally, the method further includes:
releasing connection resources with the first core network.

Optionally, the first handover acknowledgement information further includes: second indication information, where the second indication information is configured to instruct the first access network device to send a handover command to the terminal;
the method further includes:
sending, by the first access network device, the handover command to the terminal based on the second indication information, where the handover command is configured to indicate a handover reason and related information of the second core network;
obtaining, by the first access network device, second handover acknowledgement information sent by the terminal.

This disclosure also provides a handover processing method, including:
in a case where a first core network is not able to provide network services to a terminal, a second core network obtains a handover request sent by a first access network device;
determining, by the second core network, to perform a handover of the terminal's services from the first core network to the second core network based on the handover request;
the first core network and the second core network respectively include different network nodes, and each network node supports one or more of a mobility management function, a session management function, or a user plane function.

Optionally, the determining, by the second core network, to perform a handover of the terminal's services from the first core network to the second core network based on the handover request includes:
updating, by the second core network, a PDU session of the terminal based on the handover request and sends first handover acknowledgement information to the first access network device, where the first handover acknowledgement information includes user plane function tunnel information, and the user plane function tunnel information is used for the first access network device to establish a user plane tunnel with the second core network.

Optionally, after sending the first handover acknowledgement information to the first access network device, the method further includes:
sending configuration update information to the terminal, where the configuration update information is configured to instruct the terminal to update a configuration of the PDU session;
obtaining a configuration update response sent by the terminal.

Optionally, before the second core network switches the terminal's services from the first core network to the second core network based on the handover request, the method further includes:
obtaining a connection update request sent by a third core network, where the connection update request is configured to instruct the second core network to establish connections with the first access network device and the terminal respectively;
sending a connection update response to the third core network, where the connection update response includes a first connection identifier and a second connection identifier;
establishing a connection with the first access network device based on the first connection identifier and establishing a connection with the terminal based on the second connection identifier.

This disclosure also provides a handover processing apparatus, applied to a first access network device, including a memory, a transceiver, and a processor;
the memory is configured to store a computer program; the transceiver is configured to transmit and receive data under the control of the processor; the processor is configured to read the computer program from the memory and perform:

**In** a case where a first core network is not able to provide network services to a terminal, sending a handover request to a second core network, where the handover request is configured to request a handover of the terminal's services from the first core network to the second core network;
the first core network and the second core network respectively include different network nodes, and each network node supports one or more of a mobility management function, a session management function, or a user plane function.

Optionally, the processor executes the program to further perform:
obtaining related information of the terminal from a source access network device of the terminal;
sending the handover request to the second core network based on the related information of the terminal.

Optionally, the first access network device is the source access network device of the terminal;
The processor executes the program to further perform:
obtaining a first connection identifier sent by the second core network, where the first connection identifier is a connection identifier between the second core network and the first access network device;
establishing a connection with the second core network based on the first connection identifier.

Optionally, the processor executes the program to further perform:
sending first indication information to the terminal through the transceiver, where the first indication information is configured to indicate that the first core network is not able to provide network services to the terminal, and the first access network device is the source access network device of the terminal;
obtaining first response information sent by the terminal through the transceiver and sending the handover request to the second core network.

Optionally, the first access network device is the source access network device of the terminal, the first response information includes related information of a second access network device, the second access network device is a target access network device of the terminal, and the second access network device is different from the first access network device;
The processor executes the program to further perform:
sending the related information of the terminal to the second access network device that triggers the second access network device to send the handover request to the second core network.

Optionally, the processor executes the program to further perform:
obtaining first handover acknowledgement information sent by the second core network, where the first handover acknowledgement information includes user plane function tunnel information, and the user plane function tunnel information is used for the first access network device to establish a user plane tunnel with the second core network.

This disclosure also provides a handover processing apparatus, applied to a second core network, including a memory, a transceiver, and a processor;
the memory is configured to store a computer program; the transceiver is configured to transmit and receive data under the control of the processor; the processor is configured to read the computer program from the memory and perform:
in a case where a first core network is not able to provide network services to a terminal, obtaining a handover request sent by a first access network device;
determining to perform a handover of the terminal's services from the first core network to the second core network based on the handover request;
the first core network and the second core network respectively include different network nodes, and each network node supports one or more of a mobility management function, a session management function, or a user plane function.

Optionally, the processor executes the program to further perform:
updating a PDU session of the terminal based on the handover request and sending first handover acknowledgement information to the first access network device, where the first handover acknowledgement information includes user plane function tunnel information, and the user plane function tunnel information is used for the first access network device to establish a user plane tunnel with the second core network.

Optionally, the processor executes the program to further perform:
sending configuration update information to the terminal, where the configuration update information is configured to instruct the terminal to update a configuration of the PDU session;
obtaining a configuration update response sent by the terminal.

Optionally, the processor executes the program to further perform:
obtaining a connection update request sent by a third core network, where the connection update request is configured to instruct the second core network to establish connections with the first access network device and the terminal respectively;
sending a connection update response to the third core network, where the connection update response includes a first connection identifier and a second connection identifier;
establishing a connection with the first access network device based on the first connection identifier and establishing a connection with the terminal based on the second connection identifier.

This disclosure also provides a handover processing apparatus, applied to a first access network device, including:
a first processing unit, configured to, in a case where a first core network is not able to provide network services to a terminal, send a handover request to a second core network, where the handover request is configured to request a handover of the terminal's services from the first core network to the second core network;
the first core network and the second core network respectively include different network nodes, and each network node supports one or more of a mobility management function, a session management function, or a user plane function.

This disclosure also provides a handover processing apparatus, applied to a second core network, including:
a first obtaining unit, configured to, in a case where a first core network is not able to provide network services to a terminal, obtain a handover request sent by a first access network device;
a second processing unit, configured to determine to perform a handover of the terminal's services from the first core network to the second core network based on the handover request;
the first core network and the second core network respectively include different network nodes, and each network node supports one or more of a mobility management function, a session management function, or a user plane function.

This disclosure also provides a processor-readable storage medium, where the processor-readable storage medium stores a computer program, and the computer program is configured to cause the processor to execute the steps of the handover processing method according to any one of claims 1 to 9, or execute the steps of the handover processing method according to any one of claims 10 to 13.

The above technical solutions of this disclosure have at least the following beneficial effects:
In the embodiments of this disclosure, in a case where a first core network is not able to provide network services to a terminal, a first access network device sends a handover request to a second core network, where the handover request is configured to request a handover of the terminal's services from the first core network to the second core network, thereby achieving a reliable connection between the terminal and the second core network through the above handover process, ensuring the continuity of the terminal's services

### BRIEF DESCRIPTION OF THE DRAWINGS

FIG.1 shows a structural diagram of a network system applicable to the embodiments of this disclosure;
FIG.2 shows a schematic flowchart of a handover processing method according to an embodiment of this disclosure;
FIG.3 shows a schematic interaction diagram of a handover processing method according to an embodiment of this disclosure;
FIG.4 shows another schematic interaction diagram of a handover processing method according to an embodiment of this disclosure;
FIG.5 shows yet another schematic interaction diagram of a handover processing method according to an embodiment of this disclosure;
FIG.6 shows yet another schematic interaction diagram of a handover processing method according to an embodiment of this disclosure;
FIG.7 shows yet another schematic interaction diagram of a handover processing method according to an embodiment of this disclosure;
FIG.8 shows yet another schematic interaction diagram of a handover processing method according to an embodiment of this disclosure;
FIG.9 shows yet another schematic interaction diagram of a handover processing method according to an embodiment of this disclosure;
FIG.10 shows another schematic flowchart of a handover processing method according to an embodiment of this disclosure;
FIG.11 shows a structural block diagram of a handover processing apparatus according to an embodiment of this disclosure;
FIG.12 shows a schematic module diagram of a handover processing apparatus according to an embodiment of this disclosure; and
FIG.13 shows another schematic module diagram of a handover processing apparatus according to an embodiment of this disclosure.

### DETAILED DESCRIPTION

To make the technical problems, technical solutions, and advantages of this disclosure clearer, the following describes in detail with reference to the accompanying drawings and specific embodiments.

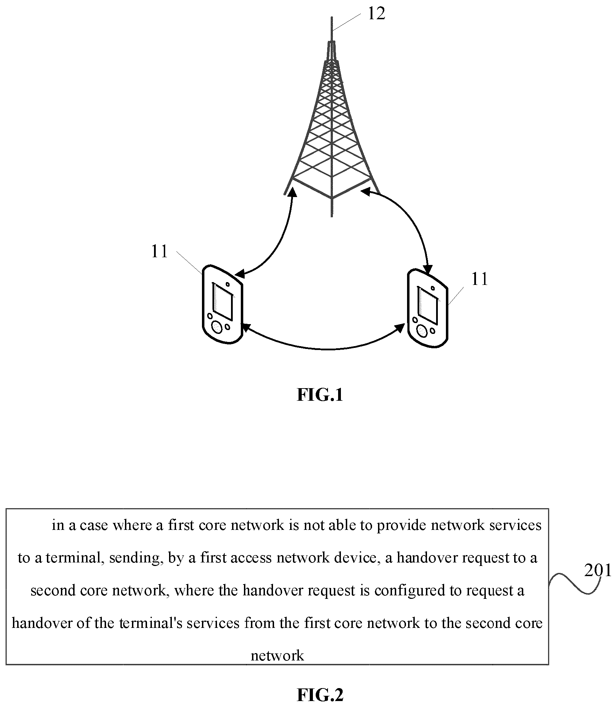

FIG.1 shows a block diagram of a wireless communication system applicable to the embodiments of this disclosure. The wireless communication system includes a terminal device 11 and a network-side device 12. The terminal device 11 may also be referred to as a terminal or user equipment (UE). It should be noted that the specific type of the terminal 11 is not limited in the embodiments of this disclosure. The network-side device 12 may be a base station or a core network. It should be noted that in the embodiments of this disclosure, only a base station in an NR system is taken as an example, but the specific type of the base station is not limited.

To enable those skilled in the art to better understand the embodiments of this disclosure, the following explanations are provided first.

### 1. 6G Distributed Network Architecture.

6G will face diverse scenarios and network requirements in the air, space, ground, and sea. An important trend in the development of 6G networks is the centralized and distributed network architecture. The native design of the network architecture of 5G and previous generations is centralized control. With the development of networks, driven by both business scenarios and technological advancements, the design of 6G networks needs to consider a distributed architecture, with control gradually evolving toward distribution. With the distribution of intelligence and the development of distributed cloud computing, new connections and new networks will also move toward distribution.

A centralized network architecture cannot uniformly meet all scenarios. To address this challenge, the 6G network architecture needs to go beyond centralized control and gradually evolve toward a distributed architecture, extending more network functions (such as authentication and authorization) to the network edge, establishing distributed micro-cloud units with different functional levels. Each micro-cloud unit is self-contained and has complete control and data forwarding functions. Multiple micro-cloud units can form autonomous micro-networks according to business requirements, providing network services tailored to specific business scenarios, user scales, geographic environments, and other requirements.

### 2. Mobility Management.

Mobility management (MM) refers to the management of mobile terminal location information, security, and service continuity, striving to optimize the connection state between the terminal and the network, thereby ensuring the application of various network services.

Location information management: The network tracks and records the location information of mobile terminals in real-time, which is the basis for providing various network services. In the work of recording location information, devices on the network have different responsibilities. The home location register (HLR) records the addresses of the mobile handover center server (MSCS) and the visitor location register (VLR), the VLR records the location area identity (LAI), and the LAI is also recorded in the SIM card. The location update process ensures the consistency of information among the three. Specifically, the terminal reports its location information to the network under various conditions, such as when it powers on, when the location area changes, or when the periodic location update timer expires.

Service continuity management: In addition to the location update process, mobility management also needs to consider the uninterrupted service when users move within the network. For example, in the scenario of a long call on a high-speed train, users do not want to re-initiate a call every time they change a location area. The reason why the call can smoothly transition from one MSCS to another MSCS to continue providing services is due to the handover function.

It is the characteristic of mobile systems that users can change their location information at will, which brings about mobility management in the network. Through the close cooperation of different network elements and terminals, it completes the real-time reporting and updating of user location information and the handover processing during calls, thereby ensuring service continuity and improving customer experience.

### 3. Distributed Networks.

A distributed network is interconnected by node machines distributed in different locations and with multiple terminals. Any point in the network is connected to at least two lines. When any line fails, communication can be transferred through other links, providing high reliability. At the same time, the network is easy to expand.

A distributed network is also called a mesh network, which is interconnected by computer systems distributed in different locations, and there is no central node in the network. The communication subnet is a closed structure, and the communication control functions are distributed among the nodes.

The characteristics of a distributed network are: high reliability; easy sharing of resources among nodes in the network; improved allocation of information flow on the lines; the ability to select the best path, with small transmission delays; complex control: complex software; high line costs, and difficulty in expansion.

Local area networks usually have only four types: bus, ring, star, and tree networks. In actual local area network construction, the topology structure is not necessarily single, but usually a combination of these four topology structures, especially after the development of local area network interconnection technology, some composite forms of topology structures will appear. Distributed networks are often used in wide area networks.

### 4. Centralized Networks.

A centralized network is a star or tree topology network where all information must pass through a central node switch, and all types of links originate from the central node switch. Centralized management is a modem network communication technology that establishes a perfect data system and information sharing mechanism for enterprise decision-making through a centralized management system. The centralized management system is installed on a server, and users of each system log in to use the system through a wide area network, operating the same system and sharing the same database, achieving data management permissions that comply with the organizational structure in related technologies through strict permission management and security mechanisms.

### 5. Xn Handover.

(1a): If the public land mobile network (PLMN) has been configured with auxiliary radio access technology (RAT) usage reporting, the source next-generation radio access network (NG-RAN) node can provide the authentication management function (AMF) with a RAN usage data report (N2 SM information (auxiliary RAT usage data), handover flag).

The source NG-RAN node should only provide this function if the target NG-RAN confirms the handover through the Xn interface. The handover flag indicates to the AMF that it should buffer the N2 SM information containing the usage data report before forwarding.
(1b): Target NG-RAN to AMF: N2 path switch request (list of PDU sessions to be switched with N2 SM information, list of rejected PDU sessions for each PDU session with N2 SM information including rejection reasons, UE location information).
(2): AMF to session management function (SMF): Nsmf_PDUSession_UpdateSMContext request (PDU sessions to be switched with N2 SM information from the target NG-RAN (path switch request transfer) and N2 SM information from the source NG-RAN (auxiliary RAT usage data), rejected PDU sessions with rejection reasons, UE location information, UE presence in LADN service area). The N2 SM information from the source NG-RAN is the information buffered in step 1a when applicable.
(3): SMF to user plane function (UPF): N4 session modification request (access node (AN) tunnel information, core node (CN) tunnel information).
(4): UPF to SMF: N4 session modification response (CN tunnel information).
(5): To assist the reordering function of the target NG-RAN, the UPF (as specified in TS 23.501 [2] section 5.8.2.9) sends one or more "end marker" packets for each N3 tunnel on the old path immediately after the handover path. The UPF starts sending downlink data packets to the target NG-RAN.
(6): SMF to AMF: Nsmf_PDUSession_UpdateSMContext response (CN tunnel information).
(7): AMF to NG-RAN: N2 path switch request acknowledgment (N2 SM information, PDU session failures).
(8): The target NG-RAN confirms the successful handover by sending a release resources message to the source NG-RAN. It then triggers resource release using the source NG-RAN.
(9): Start the registration process.

### 6. N2 Handover.

### 6.1 Preparation Phase:

Step 1: Source RAN (S-RAN) to source AMF (S-AMF): Handover required (target ID, source to target transparent container, SM N2 information list, PDU session ID, intra-system handover indication).

Step 2: T-AMF selection: When the S-AMF can no longer serve the UE, the S-AMF selects the T-AMF according to the relevant description.

Step 3: [Conditional] S-AMF to target AMF (T-AMF): Namf_Communication_CreateUEContext request (N2 information (target identity (ID), source to target transparent container, SM N2 information list, protocol data unit (PDU) session ID), UE context information (subscription permanent identifier (SUPI), service area restrictions, allowed network slice selection assistance information (NSSAI)) for each access type (if available), tracking requirements, PDU session ID list and corresponding SMF information and corresponding S-NSSAI (PCF ID and DNN). If the subscription information includes tracking requirements, the old AMF provides the tracking requirements to the target AMF.

It should be noted that the [conditional] in the embodiments of this disclosure means that the corresponding step is executed when certain conditions are met. If the conditions are not met, the corresponding step can be omitted.

Step 4: [Conditional] T-AMF to SMF: Nsmf_PDUSession_UpdateSMContext (PDU session ID, target ID, T-AMF ID, N2 SM information).

Step 5: [Conditional] Based on the target ID, the SMF checks whether the N2 handover of the indicated PDU session can be accepted. The SMF also checks the UPF selection criteria according to TS 23.501 [2] section 6.3.3. If the UE has moved out of the service area of the UPF connected to the NG-RAN, the SMF selects a new intermediate UPF. If redundant transmission is performed for one or more QoS flows of the PDU session, the SMF selects two new intermediate UPFs to support redundant transmission based on the two N3 and N9 tunnels between the T-RAN and the UPF (PSA), as described in TS 23.501 [2] section 5.33.2.2. In this case, steps 6c and 6d are performed between the SMF and each T-UPF.

Step 6a: [Conditional] SMF to UPF (PDU session anchor (PSA)): N4 session modification request.

Step 6b: [Conditional] UPF (PSA) to SMF: N4 session modification response.

Step 6c: [Conditional] SMF to T-UPF (intermediate): N4 session establishment request.

Step 6d: T-UPF (intermediate) to SMF: N4 session establishment response.

Step 7: SMF to T-AMF: Nsmf_PDUSession_UpdateSMContext response (PDU session ID, N2 SM information, rejection reasons).

Step 8: The AMF supervises the Nsmf_PDUSession_UpdateSMContext response messages from the relevant SMFs. The minimum value of the maximum delay indication for the PDU sessions as handover candidates gives the AMF the maximum time it can wait for the Nsmf_PDUSession_UpdateSMContext response messages before continuing the N2 handover process (the handover request message in step 9). The AMF continues the N2 handover process when the maximum waiting time expires or when all Nsmf_PDUSession_UpdateSMContext response messages are received.

Step 9: T-AMF to T-RAN (target RAN): Handover request (source to target transparent container, N2 MM information, N2 SM information list, tracking requirements). If the subscription information includes tracking requirements, the target AMF (T-AMF) provides the tracking requirements to the target RAN in the handover request.

Step 10: T-RAN to T-AMF: Handover request acknowledgment (target to source transparent container, list of PDU sessions to be switched for each PDU session with N2 SM information, list of PDU sessions that failed to be set up for each PDU session with N2 SM information including failure reasons).

Step 11a: AMF to SMF: Nsmf_PDUSession_UpdateSMContext request (PDU session ID, N2 SM response received from T-RAN in step 10).

Step 11b: [Conditional] SMF to T-UPF: N4 session modification request (T-RAN SM N3 forwarding information list, indication to allocate DL forwarding tunnel for indirect forwarding).

Step 11c: [Conditional] T-UPF to SMF: N4 session modification response (T-UPF SM N3 forwarding information list).

Step 11d: [Conditional] SMF to S-UPF: N4 session modification request (T-RAN SM N3 forwarding information list or T-UPF SM N3 forwarding information list, indication to allocate DL forwarding tunnel for indirect forwarding).

Step 11e: [Conditional] S-UPF to SMF: N4 session modification response (S-UPF SM N3 forwarding information list).

Step 11f: SMF to T-AMF: Nsmf_PDUSession_UpdateSMContext response (N2 SM information).

Step 12: [Conditional] T-AMF (target AMF) to S-AMF (source AMF): Namf_Communication_CreateUEContext response (N2 information required by S-AMF to send the handover command to S-RAN, including target to source transparent container, list of PDU sessions that failed to be set up, N2 SM information (N3 DL forwarding information, PCF ID)).

### 6.2 Execution Phase:

Step 1: S-AMF to S-RAN: Handover command (target to source transparent container, list of PDU sessions to be switched with N2 SM information received from T-RAN during the handover preparation phase, list of PDU sessions that failed to be set up).

Step 2: S-RAN to UE: Handover command (UE container).

Step 2a: S-RAN sends an uplink RAN status transfer message to S-AMF, as specified in TS 36.300 [46] and TS 38.300 [9]. If none of the UE's radio bearers should be processed with PDCP status preservation, the S-RAN may omit sending this message.

Step 3: Uplink packets are sent from T-RAN to T-UPF and UPF (PSA). Downlink packets are sent from UPF (PSA) to S-RAN through S-UPF. S-RAN should start forwarding downlink data for QoS flows from S-RAN to T-RAN, or perform data forwarding for DRBs. This can be direct or indirect forwarding.

Step 4: UE to T-RAN: Handover acknowledgment.

Step 5: T-RAN to T-AMF: Handover notification.

Step 6a: [Conditional] T-AMF to S-AMF: Namf_Communication_N2InfoNotify. The T-AMF notifies the S-AMF of the N2 handover notification received from T-RAN by invoking Namf_Communication_N2InfoNotify.

Step 6b: [Conditional] S-AMF to T-AMF: Namf_Communication_N2InfoNotify ACK (N2 SM information (auxiliary RAT usage data)).

Step 6c: [Conditional] S-AMF to SMF: Nsmf_PDUSession_ReleaseSMContext request (SUPI, PDU session ID, N2 SM information (auxiliary RAT usage data)).

Step 7: T-AMF to SMF: Nsmf_PDUSession_UpdateSMContext request (handover completion indication for PDU session ID, UE presence in LADN service area, N2 SM information (auxiliary RAT usage data)). The N2 SM information here is the information received in step 6b when applicable.

Step 8a: [Conditional] SMF to T-UPF (intermediate): N4 session modification request.

Step 8b: [Conditional] T-UPF to SMF: N4 session modification response.

Step 9a: [Conditional] SMF to S-UPF (intermediate): N4 session modification request.

Step 9b: [Conditional] S-UPF to SMF: N4 session modification response.

Step 10a: [Conditional] SMF to UPF (PSA): N4 session modification request.

Step 10b: [Conditional] UPF (PSA) to SMF: N4 session modification response.

Step 11: SMF to T-AMF: Nsmf_PDUSession_UpdateSMContext response (PDU session ID).

Step 12: UE initiates the mobility registration update process.

Step 13a: [Conditional] SMF to S-UPF (intermediate): N4 session release request.

Step 13b: S-UPF to SMF: N4 session release response.

Step 14a: AMF to S-RAN: UE context release command.

Step 14b: S-RAN to AMF: UE context release completion.

Step 15a: [Conditional] SMF to T-UPF: N4 session modification request.

Step 15b: [Conditional] T-UPF to SMF: N4 session modification response.

When a network node (centralized or distributed) within the core network can no longer provide network services to the terminal, how to ensure the continuity of the terminal's services is an urgent problem to be solved.

As shown in FIG.2, an embodiment of this disclosure provides a handover processing method, including:

Step 201: in a case where a first core network is not able to provide network services to a terminal, sending, by a first access network device, a handover request to a second core network, where the handover request is configured to request a handover of the terminal's services from the first core network to the second core network;

the first core network and the second core network respectively include different network nodes, and each network node supports one or more of a mobility management function, a session management function, or a user plane function.

Optionally, sending, by the first access network device, the handover request to the second core network includes: sending, by the first access network device, the handover request to an access and mobility management function node of the second core network.

Optionally, the different network nodes included in the first core network and the second core network are distributed network nodes; and/or, centralized network nodes.

The first core network being unable to provide network services to the terminal includes: a network node within the first core network being down, powered off, or experiencing other abnormal conditions.

The first access network device may be a source access network device of the terminal or a target access network device of the terminal.

As an embodiment, in a case where the first core network is not able to provide network services to the terminal, the source access network device directly executes the core network handover process (i.e., sends the handover request to the second core network) to ensure the reliable connection of the terminal.

In the embodiments of this disclosure, in a case where the first core network is not able to provide network services to the terminal, the first access network device sends a handover request to the second core network, where the handover request is configured to request a handover of the terminal's services from the first core network to the second core network, thereby achieving a reliable connection between the terminal and the second core network through the above handover process, ensuring the continuity of the terminal's services.

As another embodiment, the first access network device is the target access network device of the terminal;
sending, by the first access network device, the handover request to the second core network includes:

The first access network device obtains related information of the terminal from the source access network device of the terminal;

The first access network device sends the handover request to the second core network based on the related information of the terminal.

Optionally, the related information of the terminal includes but is not limited to one or more of the following: service data, public land mobile network (PLMN) ID, network identifier (NID), context information of the terminal, context information of the session.

This implementation is aimed at the scenario where a network node (which may be a distributed node or a centralized node) in the first core network to which the terminal is connected suddenly goes down, loses power, or experiences other abnormal conditions, and can no longer continue to serve the terminal, and the connected (R)AN (source access network device) cannot directly access other target network nodes (e.g., a network node in the second core network), and needs to indirectly access other target network nodes through other (R)ANs. In this scenario, the source (R)AN and the target (R)AN have an Xn interface, and data can be directly transmitted; the source (R)AN to which the terminal is initially connected serves as a relay, i.e., a transparent transmission function, transparently transmitting the related information data of the terminal to the target (R)AN, and then the selected target (R)AN completes the access process in the second core network. In this implementation, the source (R)AN serves as a data relay, and the target access network device has the handover function.

As another embodiment, the first access network device is the source access network device of the terminal, and before the first access network device sends the handover request to the second core network, the method further includes:

The first access network device obtains a first connection identifier sent by the second core network, where the first connection identifier is a connection identifier between the second core network and the first access network device;

The first access network device establishes a connection with the second core network based on the first connection identifier.

In this implementation, when a distributed network node (which may be referred to as a source network node) in the first core network can no longer provide network services to the terminal, a centralized network node in the first core network selects a new distributed network node (i.e., a target network node in the second core network) based on the location and other information of the source distributed network node, and establishes a connection between the target network node and the source access network device, thereby achieving the purpose of handover the terminal's services from the source network node to the target network node.

As another embodiment, the method further includes:
the first access network device sending first indication information to the terminal, where the first indication information is configured to indicate that the first core network is not able to provide network services to the terminal;

The sending, by the first access network device, the handover request to the second core network includes:
the first access network device obtaining first response information sent by the terminal and sends the handover request to the second core network.

Optionally, the first indication information is an abnormal request, and the first indication information carries an abnormal reason, such as a network node in the first core network being in a non-working state.

Optionally, the first access network device is the source access network device of the terminal, the first response information includes related information of a second access network device, the second access network device is a target access network device of the terminal, and the second access network device is different from the first access network device;

The method further includes:
the first access network device sending the related information of the terminal to the second access network device that triggers the second access network device to send the handover request to the second core network.

Optionally, the related information of the second access network device includes identifier information of the second access network device

**In** this implementation, when the first core network can no longer provide network services to the terminal, a negotiation mechanism is added between the source access network device and the terminal, and the terminal determines which access network device will serve the terminal. The second access network device determined by the terminal may be the same as the first access network device or different from the first access network device.

It should be noted that, in the embodiments of the present disclosure, the same access network device can be connected to multiple different core networks. For example, the above-mentioned first access network device can be connected to both the first core network and the second core network.

**In** addition, when the second access network device is different from the first access network device, the terminal can also directly send related information of the terminal to the second access network device (that is, without sending related information of the terminal through the first access network device) that triggers the second access network device to send a handover request to the second core network.

Optionally, the method further comprises:
obtaining first handover acknowledgement information sent by the second core network, where the first handover acknowledgement information includes user plane function tunnel information, and the user plane function tunnel information is configured to establish a user plane tunnel between the first access network device and the second core network.

Specifically, after the first access network device sends a handover request to the second core network, it obtains first handover acknowledgement information sent by the second core network.

Optionally, the PDU session related information includes a PDU session information list to be switched, a tunnel information list of the PDU session to be switched, etc.

Optionally, the first handover acknowledgement information also includes: a list of PDU session information of successful handover, a list of PDU session information of failed handover, etc.

Optionally, the method further comprises:
releasing the connection resources with the first core network.

Optionally, the first handover acknowledgement information further includes: second indication information, where the second indication information is configured to instruct the first access network device to send a handover command to the terminal; for example, the second indication information may carry a handover reason value, where the handover reason value may specifically be that a certain network node of the first core network is in an inoperative state;

After the first access network device obtains the first handover acknowledgement information sent by the second core network, the method further includes:
the first access network device sending the handover command to the terminal according to the second indication information, where the handover command is configured to indicate the handover reason and related information of the second core network;

The first access network device obtains second handover acknowledgement information sent by the terminal.

Exemplarily, the reason for the handover may be that a network node of the first core network is in a non-working state, and the related information of the second core network includes but is not limited to at least one of the following: a tracking area list, an allowed network slice identifier, and a served PLMN.

The handover processing method disclosed in the present invention is described below in conjunction with specific embodiments.

### Embodiment 1

In the case where the source network node (distributed network node or centralized network node, the source network node is a network node in the first core network, such as an access and mobility management function network node in the first core network) to which the terminal is connected is not able to provide network services to the terminal (such as sudden downtime, power outage or other abnormal conditions), the wireless access network device or the access network device (R)AN side can detect that the source network node to which it is connected is not able to provide services to the terminal, and can automatically trigger a handover request. In this embodiment, the (R)AN automatically selects a target network node (a network node in the second core network, such as an access and mobility management function network node in the second core network) that can provide services. The terminal is unaware of the handover process of the network node, thereby completing the reliability access process of leaving the source network node.

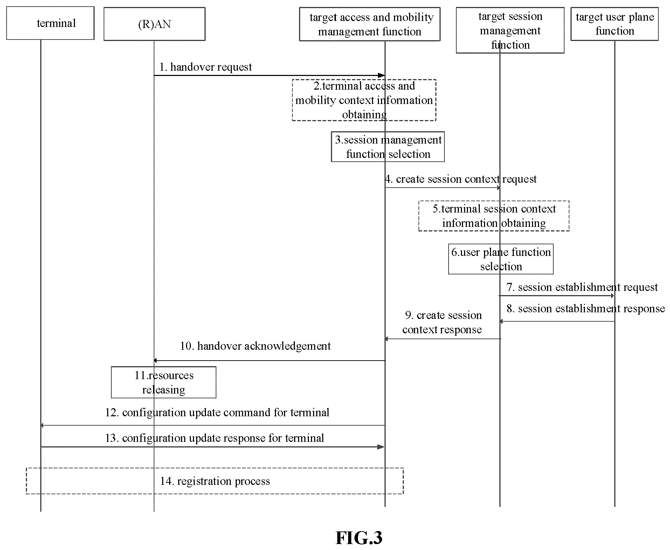

As shown in FIG3, the method includes:
the source network node it is connected to cannot continue to serve the terminal, since the (R)AN can sense that the source access and mobility management function to which it is connected is abnormal, the (R)AN selects a new network node access and mobility management function, that is, the target network node in the second core network, such as the target access and mobility management function network node. At the same time, a handover request is triggered to the target access and mobility management function network node, which carries information such as the PDU session information list to be switched and the tunnel information list of the PDU session to be switched.

Step 2 (optional step): After the target access and mobility management function network node receives the handover request, the target access and mobility management function network node needs to obtain information about the access and mobility context of the terminal. This step is optional. If the target access and mobility management function network node has already obtained this information, this step is omitted; if there is no relevant context information, it needs to be obtained. This information can be obtained during the data synchronization process between distributed nodes, or it can be pushed from a centralized node to a distributed node, or the distributed node actively obtains it from a centralized node. The specific details are not described again.

Step 3: The target access and mobility management function network node selects a session management function (target session management function) that can be served in the second core network according to the information carried in the handover request and the obtaind terminal context information.

Step 4: The target access and mobility management function network node sends a create session context request to the target session management function network node. The messages carried mainly include the PDU session information list to be switched, user plane tunnel information, terminal location information, etc.

Step 5 (optional step): The target session management function network node needs to obtain information about the terminal's session context. This step is optional. If the target session management function network node has already obtained this information, this step is omitted; if there is no relevant context information, it needs to be obtained. This information can be obtained during the data synchronization process between distributed nodes, or it can be pushed from a centralized node to a distributed node, or the distributed node can actively obtain it from the centralized node. The specific details are not described here.

Step 6: The target session management function network node selects a user plane function according to the session context information of the terminal and establishes a user plane path.

Step 7: The target session management function network node sends a session establishment request to the target user plane function network node (user plane function of the second core network). There may be one or more user plane functions here, and sends forwarding rules to the user plane function. This process will also send the tunnel information of the (R)AN to the user plane function.

Step 8: The target user plane function network node sends a session establishment response to the target session management function network node, and the information carried includes tunnel information and other information.

Step 9: The target session management function network node sends an update session context response to the target access and mobility management function network node, carrying information such as user plane tunnel information, a list of session related information of successful handover, and a list of failed session information.

Step 10: The target access and mobility management function network node sends a path request a handover of acknowledgement message to the (R)AN, which carries information including user plane function tunnel information, a list of session related information for successful handover, a list of session information for failed handover, and other information.

Step 11: When the (R)AN receives the handover request acknowledgement message, it releases the previously saved source network node related information, indicating that the handover is successful.

Step 12: The target access and mobility management function network node initiates configuration update information (or commands) to the terminal. The update messages mainly carry information such as the tracking area list, allowed network slice identifiers, served PLMN, and the status of all sessions.

Step 13: After the terminal completes the configuration update, it sends a response message to the target access and mobility management function network node. At the same time, the terminal updates the session status.

Step 14: The terminal initiates a mobility registration update process.

When certain conditions are met, the terminal initiates a mobility registration update process, which may be performed according to relevant techniques and will not be described in detail herein.

### Embodiment 2

In the case where the source network node (distributed network node or centralized network node, the source network node is a network node in the first core network, such as an access and mobility management function network node in the first core network) to which the terminal is connected is not able to provide network services to the terminal (such as sudden downtime, power outage or other abnormal conditions), the wireless access network device or the access network device (R)AN side can detect that the source network node to which it is connected is not able to provide services to the terminal, and can automatically trigger a handover request. In this embodiment, the (R)AN automatically selects a target network node (a network node in the second core network, such as an access and mobility management function network node in the second core network) that can provide services. The terminal is unaware of the handover process of the network node, thereby completing the reliability access process of leaving the source network node.

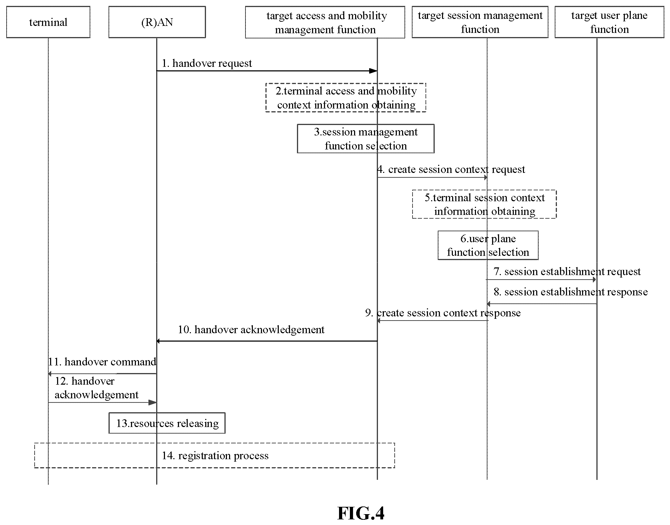

As shown in FIG4, the method includes:
Step 1-8: Step 1-8 is the same as Step 1-8 in the above-mentioned embodiment 1.

Step 9: The target session management function network node sends an update session context response to the target access and mobility management function network node, which carries information such as tunnel information of the user plane function, a handover command indication (handover reason value: the source service network is not working), a list of session related information of successful handover, a list of session information of failed handover, and other information.

Step 10: The target access and mobility management function network node sends a first handover acknowledgement message to the (R)AN, which carries information including user plane function tunnel information, handover command indication (handover reason value: the source service network is not working), a list of session-related information for successful handover, a list of session information for failed handover, a tracking area list, allowed network slice identifiers, the PLMN of the service, and other information.

The handover command indication may specifically be the above-mentioned second indication information.

Step 11: (R)AN completes the establishment of the user plane tunnel based on the received user plane tunnel information, and sends a handover command to the terminal based on the handover command indication message. The message carried mainly includes the handover reason value: the source service network is in an inoperative state, the PDU session list of successful handover, the PDU session list of failed handover, the tracking area list, the allowed network slice identifier, the PLMN of the service and other information.

Step 12: After receiving the handover command from the (R)AN, the terminal sends a second handover acknowledgement message and updates the session status.

Step 13: Same as step 11 in the first embodiment.

Step 14: Same as step 14 in the first embodiment.

### Embodiment 3

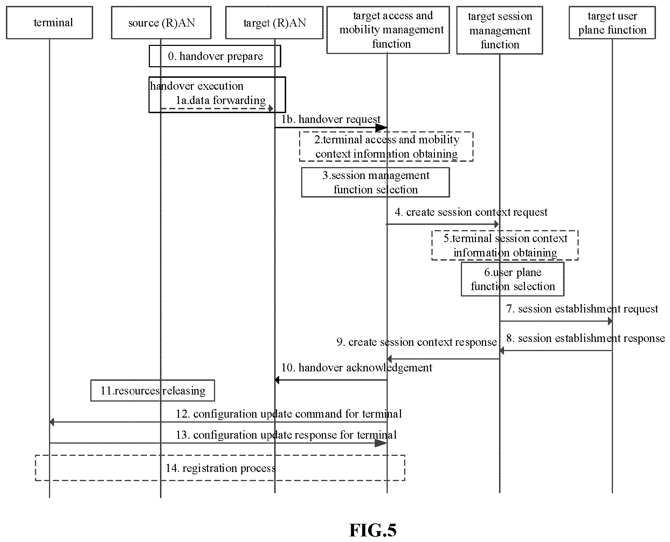

When the source network node (distributed node or centralized node, the source network node is a network node in the first core network, such as the access and mobility management function network node in the first core network) connected by the terminal suddenly crashes, loses power or encounters other abnormal situations, it can no longer continue to serve the terminal, and the connected (R)AN cannot directly access other target network nodes, and needs to indirectly access other distributed nodes through other (R)ANs. In this scenario, there is an Xn interface between the source (R)AN and the target (R)AN, and data can be transmitted directly; the source (R)AN to which the terminal initially connects plays a transit role, that is, a transparent transmission role, which transparently transmits the related information data of the terminal to the target (R)AN, and then the selected target (R)AN completes the access process of the network nodes of other core networks. This embodiment requires that the source (R)AN plays a role of transparent transmission of data, and the target (R)AN has a handover function. Specifically, the method of the third embodiment, as shown in FIG.5, includes:

Step 0: Handover preparation. In this step, when the source (R) AN finds that the currently connected source network node can no longer serve the terminal, it selects a target (R) AN with an Xn interface for the terminal to send a handover request command.

Step 1a: The source (R)AN sends the terminal's related data to the target (R)AN. In addition to service data, PLMN ID, NID, there is also terminal context information and session context information.

first embodiment, except that the (R)AN in step 1 is changed to the target (R)AN.

Step 2-14: The same as step 2-14 of the first embodiment, except that the (R)AN in the first embodiment is changed to the target (R)AN.

### Embodiment 4

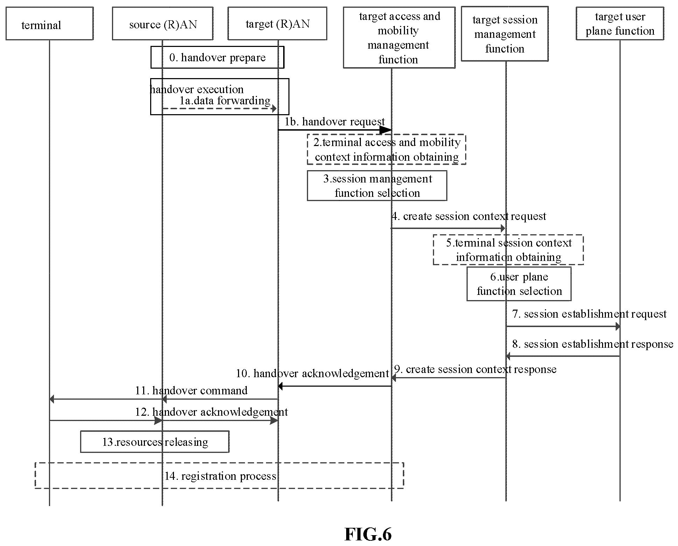

As shown in FIG6, the method includes:
Step 0-8: Same as step 0-8 of embodiment 3;
Step 9: The target session management function network node sends an update session context response to the target access and mobility management function network node, which carries information such as tunnel information of the user plane function, a handover command indication (handover reason value: the source service network is not working), a list of session related information of successful handover, a list of session information of failed handover, and other information.

Step 10: The target access and mobility management function network node sends a first handover acknowledgement message to the target (R)AN, which carries information including user plane function tunnel information, handover command indication (handover source value: the source service network is not working), a list of session-related information for successful handover, a list of session information for failed handover, a tracking area list, allowed network slice identifiers, the PLMN of the service, and other information.

Step 11: The target (R) AN completes the establishment of the user plane tunnel based on the received user plane tunnel information, and sends a handover command to the terminal based on the handover command indication message. The target (R) AN first sends a handover command to the source (R) AN, and then the source (R) AN transparently transmits this message to the terminal. The message carried by the handover command mainly includes the reason value: the source service network is not working, the PDU session list of successful handover, the PDU session list of failed handover, the tracking area list, the allowed network slice identifier, the PLMN of the service, and other information.

Step 12: After receiving the handover command from the source (R)AN, the terminal sends a second handover acknowledgement message to the source (R)AN, which then transparently transmits the acknowledgement message to the target (R)AN and updates the session status.

Step 13: Same as step 11 of embodiment 3.

Step 14: The same as step 14 of the third embodiment.

### Embodiment five:

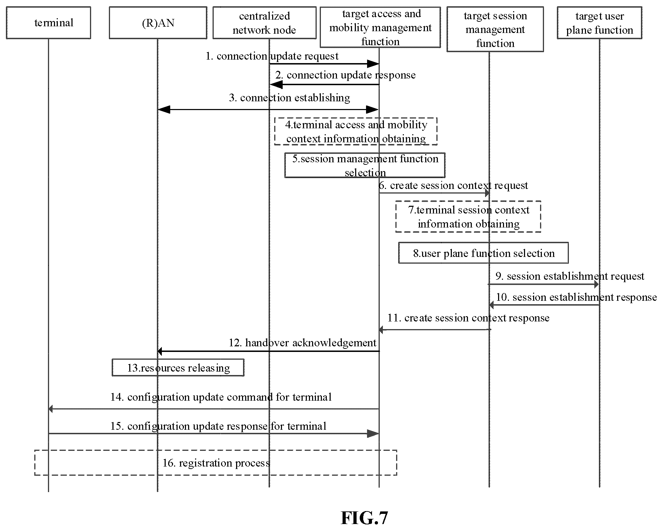

As shown in FIG.7, the method includes:
Step 1: When the centralized network node in the third core network detects that the above source network node (the source network node is a distributed node) has an abnormal situation, a new distributed node is selected based on the location and other information of the source network node, that is, the above target network node (the target network node is a distributed node). At the same time, a connection update request is sent to the target access and mobility management network node, and the information carried includes information such as the base station identifier, the base station terminal next generation application protocol identifier, and the terminal context information. The third core network can be the same as the first core network or different from the first core network.

Step 2: The target access and mobility management network node sends a connection update response to the above-mentioned centralized network node, and generates parameters such as a new connection identifier (first connection identifier) between the (R)AN and itself, and a connection identifier (second connection identifier) of the UE.

Step 3: The target access and mobility management network node completes the connection update with the source (R)AN based on the information in step 1, and sends the connection identifier between the (R)AN and itself, the connection identifier of the UE and other parameters to the source (R)AN to complete the node-level connection and UE- granularity-level connection with the source (R)AN.

Step 4-16: Same as step 2-14 of embodiment 1.

### Embodiment 6

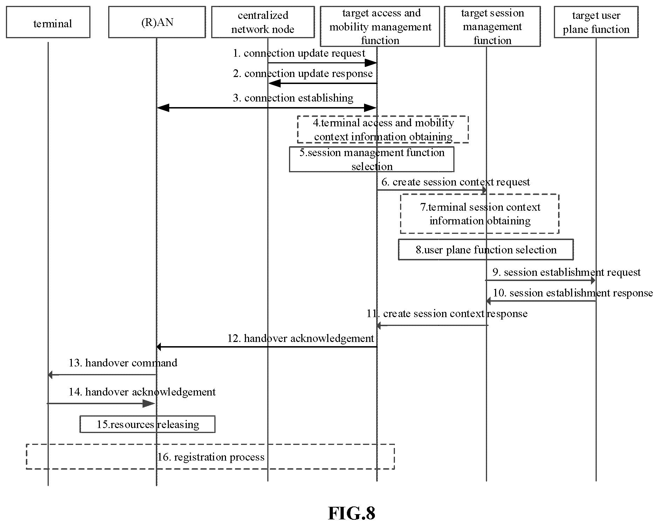

As shown in FIG8, the method includes:
Step 1-12: Same as step 1-12 of embodiment 5;
Step 13: (R)AN completes the establishment of the user plane tunnel based on the received user plane tunnel information, and sends a handover command to the terminal based on the handover command indication message. The message carried mainly includes the handover reason value: the source service network is in an inoperative state, the PDU session list of successful handover, the PDU session list of failed handover, the tracking area list, the allowed network slice identifier, the PLMN of the service and other information.

Step 14: After receiving the handover command from the (R)AN, the terminal sends a second handover acknowledgement message and updates the session status.

Step 15: Same as step 13 of embodiment 5.

Step 16: The same as step 16 of the fifth embodiment.

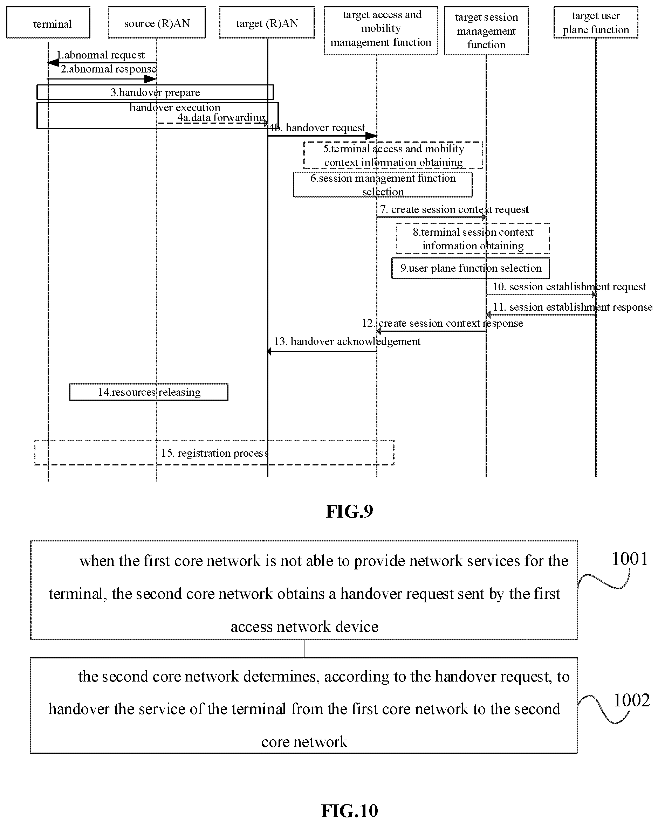

Embodiment 7 As shown in FIG9, the method includes:
When the source (R)AN finds that the source network node it is connected to (the same as the source network node in the above embodiment) can no longer serve the terminal, the source (R)AN sends an exception request to the terminal, and the report carries the reason for the exception: the network is not working, etc.

Step 2: After receiving the exception report, the terminal determines the target (R)AN to be switched and sends an exception response to the source (R)AN. The response message carries information such as the target (R)AN information.

Step 3-14: Same as step 0-11 of embodiment 3.

Step 15: Same as step 14 of embodiment 3.

In this embodiment, when the source network node can no longer provide network services to the terminal, a negotiation mechanism is added between the source access network device and the terminal, and the terminal determines which access network device serves the terminal. The second access network device determined by the terminal may be the same as the first access network device or different from the first access network device.

As shown in FIG10, the embodiment of the present disclosure further provides a handover processing method, including:
Step 1001: when the first core network is not able to provide network services for the terminal, the second core network obtains a handover request sent by the first access network device.

Optionally, this step includes the access and mobility management function node of the second core network obtaining a handover request sent by the first core network device.
Step 1002: the second core network determines, according to the handover request, to handover the service of the terminal from the first core network to the second core network;
The first core network and the second core network respectively include different network nodes, and each of the network nodes supports one or more functions of mobility management function, session management function, and user plane function.

Optionally, different network nodes respectively included in the first core network and the second core network are distributed network nodes; and/or centralized network nodes.

Optionally, the second core network switches, according to the handover request, a service of the terminal from the first core network to the second core network, including:
The second core network updates the PDU session of the terminal according to the handover request, and sends a first handover acknowledgement message to the first access network device, wherein the first handover acknowledgement message includes user plane function tunnel information, and the user plane function tunnel information is configured to establish a user plane tunnel between the first access network device and the second core network.

Optionally, after sending the first handover acknowledgement information to the first access network device, the method further includes:
sending configuration update information to the terminal, where the configuration update information is configured to instruct the terminal to update the configuration of the PDU session;

Obtain a configuration update response sent by the terminal.

Optionally, before the second core network switches the service of the terminal from the first core network to the second core network according to the handover request, the method further includes:
obtaining a connection update request sent by the third core network, where the connection update request is configured to instruct the second core network to establish connections with the first access network device and the terminal respectively;
sending a connection update response to the third core network, where the connection update response includes the first connection identifier and the second connection identifier;
establishing a connection with the first access network device according to the first connection identifier, and a connection is established with the terminal according to the second connection identifier.

In the embodiment of present disclosure, the centralized network node in the third core network monitors the distributed network node in the first core network. When it is detected that the distributed network node in the first core network is not able to provide network services for the terminal, the centralized network node in the third core network sends a connection update response to the second core network, specifically, sends a connection update response to the access and mobility management function network node in the second core network. The access and mobility management function network node of the second core network sends a connection update response to the centralized network node of the third core network.

The third core network may be the same as the first core network or may be different from the first core network.

It should be noted that the interaction process between the second core network and the first access network device and the terminal has been described in detail in the above embodiments and will not be repeated here.

In the embodiment of the present disclosure, when the first core network is not able to provide network services for the terminal, the second core network obtains a handover request sent by the first access network device, and determines to perform a handover of the terminal's service from the first core network to the second core network based on the handover request, that is, a reliable connection between the terminal and the second core network is achieved through the above-mentioned handover process, thereby ensuring the continuity of the terminal's service.

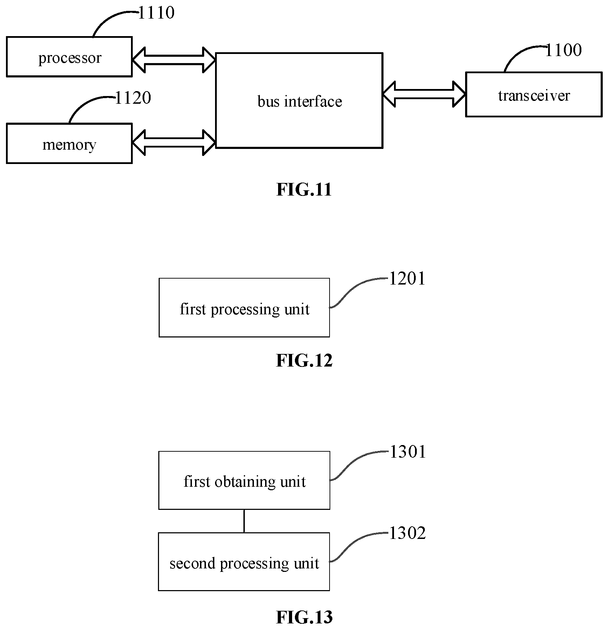

As shown in FIG11, the embodiment of the present disclosure further provides a handover processing device, including a memory 1120, a transceiver 1100, and a processor 1110;
a memory 1120, used for storing computer programs; a transceiver 1100, used for transmitting and receiving data under the control of the processor;

In one embodiment of the present disclosure, the handover processing apparatus is applied to the first access network device, and the processor 1110 is configured to read the computer program in the memory and perform:
when the first core network is not able to provide network services for the terminal, sending a handover request to the second core network, wherein the handover request is configured to request a handover of the service of the terminal from the first core network to the second core network;
the first core network and the second core network respectively include different network nodes, and each of the network nodes supports one or more functions of mobility management function, session management function, and user plane function.

Optionally, different network nodes respectively included in the first core network and the second core network are distributed network nodes; and/or centralized network nodes.

Optionally, when executing the program, the processor 1110 further performs the following steps:
obtaining the related information of the terminal from a source access network device of the terminal;
sending a handover request to the second core network according to the related information of the terminal.

Optionally, the first access network device is a source access network device of the terminal;
when the processor 1110 executes the program, the following steps are also performed:
obtaining a first connection identifier sent by the second core network, where the first connection identifier is a connection identifier between the second core network and the first access network device;
establishing a connection with the second core network according to the first connection identifier.

Optionally, when executing the program, the processor 1110 further performs the following steps:
sending first indication information to the terminal through a transceiver, where the first indication information is configured to indicate that the first core network is not able to provide network services for the terminal, and the first access network device is a source access network device of the terminal;
obtaining the first response information sent by the terminal through the transceiver, and a handover request is sent to the second core network.

Optionally, the first access network device is a source access network device of the terminal, the first response information includes related information of a second access network device, the second access network device is a target access network device of the terminal, and the second access network device is different from the first access network device;
sending related information of the terminal to the second access network device that triggers the second access network device to send a handover request to the second core network. Optionally, when the processor 1110 executes the program, it further performs the following steps:
obtaining first handover acknowledgement information sent by the second core network, where the first handover acknowledgement information includes user plane function tunnel information, and the user plane function tunnel information is configured to establish a user plane tunnel between the first access network device and the second core network.

Optionally, when executing the program, the processor 1110 further performs the following steps:
releasing the connection resources with the first core network.

Optionally, the first handover acknowledgement information further includes: second indication information, where the second indication information is configured to instruct the first access network device to send a handover command to the terminal;

Optionally, when executing the program, the processor 1110 further performs the following steps:
sending the handover command to the terminal according to the second indication information, where the handover command is configured to indicate a handover reason and related information of the second core network;
the first access network device obtaining second handover acknowledgement information sent by the terminal.

In another embodiment of the present disclosure, the above-mentioned handover processing device is applied to the second core network, and the processor 1110 is configured to read the computer program in the memory and perform:
when the first core network is not able to provide network services for the terminal, obtaining a handover request sent by the first access network device;
determining, according to the handover request, to perform a handover of the service of the terminal from the first core network to the second core network;
the first core network and the second core network respectively include different network nodes, and each of the network nodes supports one or more functions of mobility management function, session management function, and user plane function.

Optionally, when executing the program, the processor 1110 further performs the following steps:
according to the handover request, updating the PDU session of the terminal and sending a first handover acknowledgement message to the first access network device, where the first handover acknowledgement message includes user plane function tunnel information, and the user plane function tunnel information is configured to establish a user plane tunnel between the first access network device and the second core network.

Optionally, when executing the program, the processor 1110 further performs the following steps:
sending configuration update information to the terminal, where the configuration update information is configured to instruct the terminal to update the configuration of the PDU session;
obtaining a configuration update response sent by the terminal.

Optionally, when executing the program, the processor 1110 further performs the following steps:
obtaining a connection update request sent by the third core network, where the connection update request is configured to instruct the second core network to establish connections with the first access network device and the terminal respectively;
sending a connection update response to the third core network, where the connection update response includes the first connection identifier and the second connection identifier;
establishing a connection with the first access network device according to the first connection identifier, and a connection is established with the terminal according to the second connection identifier.

In FIG.11, the bus architecture may include any number of interconnected buses and bridges, specifically one or more processors represented by processor 1110 and various circuits of memory represented by memory 1120 are linked together. The bus architecture may also link together various other circuits such as peripherals, voltage regulators, and power management circuits, which are well known in the art and are therefore not further described herein. The bus interface provides an interface. The transceiver 1100 may be a plurality of components, namely, a transmitter and a receiver, providing a unit for communicating with various other devices on a transmission medium, which transmission medium includes a wireless channel, a wired channel, an optical cable, and other transmission media. The processor 1110 is responsible for managing the bus architecture and general processing, and the memory 1120 may store data used by the processor 1110 when performing operations.

The processor 1110 may be a central processing unit (CPU), an application specific integrated circuit (ASIC), a field programmable gate array (FPGA) or a complex programmable logic device (CPLD). The processor may also adopt a multi-core architecture.

It should be noted here that the above-mentioned device provided in the embodiment of the present disclosure can implement all the method steps performed by the above-mentioned method embodiment applied to the network side device (first access network device or second core network), and can achieve the same technical effect. The parts and beneficial effects of this embodiment that are the same as the method embodiment will not be described in detail here.

FIG. 12, the embodiment of the present disclosure further provides a handover processing device, which is applied to a first access network device, including:

The first processing unit 1201 is configured to send a handover request to a second core network when the first core network is not able to provide network services for the terminal, wherein the handover request is configured to request a handover of the service of the terminal from the first core network to the second core network;

The first core network and the second core network respectively include different network nodes, and each of the network nodes supports one or more functions of mobility management function, session management function, and user plane function.

Optionally, different network nodes respectively included in the first core network and the second core network are distributed network nodes; and/or centralized network nodes.

Optionally, the first access network device is a target access network device of the terminal;

The first processing unit comprises:
a first obtaining subunit, configured to obtain related information of the terminal from a source access network device of the terminal;
a first processing subunit, configured to send a handover request to the second core network according to the related information of the terminal.

Optionally, the first access network device is a source access network device of the terminal;

The device of the embodiment of the present disclosure further includes:
a second obtaining subunit, configured to, obtain a first connection identifier sent by the second core network, before the first processing unit sends a handover request to the second core network, where the first connection identifier is a connection identifier between the second core network and the first access network device;
a first connection subunit, configured to establish a connection with the second core network according to the first connection identifier.

Optionally, the device of the embodiment of the present disclosure further includes:
a first sending subunit, configured to send first indication information to a terminal, where the first indication information is configured to indicate that the first core network is not able to provide network services for the terminal;
the first processing unit includes: a second obtaining subunit, configured to obtain first response information sent by the terminal and send a handover request to the second core network.

Optionally, the first access network device is a source access network device of the terminal, the first response information includes related information of a second access network device, the second access network device is a target access network device of the terminal, and the second access network device is different from the first access network device;

The device of the embodiment of the present disclosure further includes:

Optionally, the first processing unit further includes:
the second sending subunit, configured to send related information of the terminal to the second access network device that triggers the second access network device to send a handover request to the second core network.

Optionally, the device of an embodiment of the present disclosure further includes: a third obtaining unit, configured to obtain first handover acknowledgement information sent by the second core network after the first processing unit sends a handover request to the second core network, the first handover acknowledgement information including user plane function tunnel information, and the user plane function tunnel information is configured to establish a user plane tunnel between the first access network device and the second core network.

Optionally, the device of the embodiment of the present disclosure further includes:
a releasing unit, configured to release the connection resources with the first core network after the second obtaining unit obtains the first handover acknowledgement information sent by the second core network.

Optionally, the first handover acknowledgement information further includes: second indication information, where the second indication information is configured to instruct the first access network device to send a handover command to the terminal;

The device of the embodiment of the present disclosure further includes:
a fourth obtaining unit, configured to send the handover command to the terminal according to the second indication information after the second obtaining unit obtains the first handover acknowledgement information sent by the second core network, where the handover command is configured to indicate the handover reason and related information of the second core network;
a fifth obtaining unit is configured to obtain second handover acknowledgement information sent by the terminal.

It should be noted here that the above-mentioned device provided in the embodiment of the present disclosure can implement all the method steps performed by the above-mentioned method embodiment applied to the first access network device, and can achieve the same technical effect. The parts and beneficial effects of this embodiment that are the same as the method embodiment will not be described in detail here.

As shown in FIG.13, the embodiment of the present disclosure further provides a handover processing device, which is applied to a target network node of a second network, including:
a first obtaining unit 1301, configured to obtain a handover request sent by a first access network device when the first core network is not able to provide network services for the terminal;
a second processing unit 1302, configured to determine, according to the handover request, to perform a handover of the service of the terminal from the first core network to the second core network;
the first core network and the second core network respectively include different network nodes, and each of the network nodes supports one or more functions of mobility management function, session management function, and user plane function.

Optionally, the second processing unit is configured to:
according to the handover request, update the PDU session of the terminal and send a first handover acknowledgement message to the first access network device, where the first handover acknowledgement message includes user plane function tunnel information, and the user plane function tunnel information is configured to establish a user plane tunnel between the first access network device and the second core network.

Optionally, the second processing unit further includes:
a third sending subunit, configured to send configuration update information to the terminal after the second processing unit sends the handover acknowledgement information to the first access network device, wherein the configuration update information is configured to instruct the terminal to update the configuration of the PDU session;

The third obtaining subunit is configured to obtain the configuration update response sent by the terminal.

Optionally, the device in the embodiment of the present disclosure further includes:
a sixth obtaining unit, configured to obtain, before the second processing unit determines, according to the handover request, to perform a handover of the service of the terminal from the source network node of the first network to the target network node, a connection update request sent by the third core network, wherein the connection update request is configured to instruct the target network node to establish connections with the first access network device and the terminal respectively;
a first sending unit, configured to send a connection update response to a third core network, where the connection update response includes a first connection identifier and a second connection identifier;
a first connection unit is configured to establish a connection with the first access network device according to the first connection identifier, and to establish a connection with the terminal according to the second connection identifier.

It should be noted here that the above-mentioned device provided by the embodiment of the present disclosure can implement all the method steps performed by the above-mentioned method embodiment applied to the target network node, and can achieve the same technical effect. The parts and beneficial effects of this embodiment that are the same as the method embodiment will not be described in detail here.

It should be noted that the division of units in the embodiments of the present disclosure is schematic and is only a logical function division. There may be other division methods in actual implementation. In addition, each functional unit in each embodiment of the present disclosure may be integrated into a processing unit, or each unit may exist physically separately, or two or more units may be integrated into one unit. The above-mentioned integrated unit may be performed in the form of hardware or in the form of software functional units.

If the integrated unit is performed in the form of a software functional unit and sold or used as an independent product, it can be stored in a processor-readable storage medium. Based on this understanding, the technical solution of the present disclosure is essentially or the part that contributes to the relevant technology or all or part of the technical solution can be embodied in the form of a software product. The computer software product is stored in a storage medium, including several instructions to enable a computer device (which can be a personal computer, server, or network device, etc.) or a processor (processor) to perform all or part of the steps of the method described in each embodiment of the present disclosure. The aforementioned storage medium includes: U disk, mobile hard disk, read-only memory (Read-Only Memory, ROM), random access memory (Random Access Memory, RAM), disk or optical disk and other media that can store program codes.

In some embodiments of the present disclosure, a processor-readable storage medium is further provided, wherein the processor-readable storage medium stores program instructions, and the program instructions are configured to enable the processor to execute the following steps:

When the first core network is not able to provide network services for the terminal, a handover request is sent to the second core network, and the handover request is configured to request that the terminal's service be switched from the first core network to the second core network; wherein the first core network and the second core network respectively include different network nodes, and each of the network nodes supports one or more of the mobility management function, the session management function, and the user plane function.

Alternatively, when the first core network is not able to provide network services for the terminal, obtain a handover request sent by the first access network device; and determine, based on the handover request, to perform a handover of the terminal's service from the first core network to the second core network; wherein the first core network and the second core network respectively include different network nodes, and each of the network nodes supports one or more of a mobility management function, a session management function, and a user plane function.

The terminal device involved in the embodiments of the present disclosure may be a device that provides voice and / or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CN) via a radio access network (RAN). The wireless terminal device may be a mobile terminal device, such as a mobile phone (or a "cellular" phone) and a computer with a mobile terminal device. For example, it may be a portable, pocketsized, handheld, computer-built-in or vehicle-mounted mobile device that exchanges language and / or data with a wireless access network. For example, personal communication service (PCS) phones, cordless phones, session initiation protocol (SIP) phones, wireless local loop (WLL) stations, personal digital assistants (PDA) and other devices. The wireless terminal device may also be referred to as a system, a subscriber unit, a subscriber station, a mobile station, a mobile station, a remote station, an access point, a remote terminal device, an access terminal device, a user terminal device, a user agent, and a user device, which is not limited in the embodiments of the present disclosure.

The network device of the present disclosure (i.e., the above-mentioned network side device) may be a base station, which may include multiple cells providing services for the terminal. Depending on the specific application scenario, the base station may also be called an access point, or may be a device in the access network that communicates with the wireless terminal device through one or more sectors on the air interface, or other names. The network device may be configured to interchange received air frames with Internet Protocol (IP) packets, and serve as a router between the wireless terminal device and the rest of the access network, wherein the rest of the access network may include an Internet Protocol (IP) communication network. The network device may also coordinate the attribute management of the air interface. For example, the network device involved in the embodiments of the present disclosure may be a network device (Base Transceiver Station, BTS) in the Global System for Mobile communications (GSM) or Code Division Multiple Access (CDMA), or a network device (NodeB) in Wide-band Code Division Multiple Access (WCDMA), or an evolved network device (evolutional Node B, eNB or e-NodeB) in the Long Term Evolution (LTE) system, a 5G base station (gNB) in the 5G network architecture (next generation system), or a Home evolved Node B (HeNB), a relay node, a home base station (femto), a pico base station (pico), etc., which is not limited in the embodiments of the present disclosure. In some network structures, the network devices may include centralized unit (CU) nodes and distributed unit (DU) nodes, and the centralized unit and the distributed unit may also be arranged geographically separately.

Network devices and terminal devices can each use one or more antennas for multiple input multiple output (MIMO) transmission. MIMO transmission can be single user MIMO (SU-MIMO) or multi-user MIMO (MU-MIMO). Depending on the form and number of antenna combinations, MIMO transmission can be two-dimensional MIMO antennas (2D-MIMO), three-dimensional MIMO antennas (3D-MIMO), full-dimensional MIMO antennas (FD-MIMO), or massive MIMO antennas (massive-MIMO). It can also be diversity transmission, precoding transmission, or beamforming transmission.

Those skilled in the art will appreciate that the embodiments of the present disclosure may be provided as methods, systems, or computer program products. Therefore, the present disclosure may take the form of a complete hardware embodiment, a complete software embodiment, or an embodiment combining software and hardware. Furthermore, the present disclosure may take the form of a computer program product performed on one or more computer-usable storage media (including but not limited to disk storage and optical storage, etc.) containing computer-usable program codes.

The present disclosure is described with reference to the flowcharts and/or block diagrams of the methods, devices (systems), and computer program products according to the embodiments of the present disclosure. It should be understood that each process and/or box in the flowchart and/or block diagram, as well as the combination of the processes and/or boxes in the flowchart and/or block diagram, can be performed by computer executable instructions. These computer executable instructions can be provided to a processor of a general-purpose computer, a special-purpose computer, an embedded processor, or other programmable data processing device to produce a machine, so that the instructions executed by the processor of the computer or other programmable data processing device produce a device for implementing the functions specified in one process or multiple processes in the flowchart and/or one box or multiple boxes in the block diagram.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are executed on the computer or other programmable device to produce a computer-performed process, whereby the instructions executed on the computer or other programmable device provide steps for implementing the functions specified in one or more flows in the flowchart and/or one or more blocks in the block diagram.

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

## Claims

1. A handover processing method, comprising:
in a case where a first core network is not able provide network services to a terminal, sending, by a first access network device, a handover request to a second core network, wherein the handover request is configured to request a handover of the terminal's service from the first core network to the second core network;
wherein the first core network and the second core network respectively comprise different network nodes, and each of the network nodes supports one or more of a mobility management function, a session management function, or a user plane function.

2. The method according to claim 1, wherein the different network nodes comprised in the first core network and the second core network are distributed network nodes; and/or centralized network nodes.

3. The method according to claim 1, wherein the first access network device is a target access network device of the terminal;
wherein the sending by the first access network device the handover request to the second core network comprises:
obtaining, by the first access network device, related information of the terminal from a source access network device of the terminal;
sending, by the first access network device, the handover request to the second core network based on the related information of the terminal.

4. The method according to claim 1, wherein the first access network device is a source access network device of the terminal;
before the first access network device sends the handover request to the second core network, the method further comprises:
obtaining, by the first access network device, a first connection identifier sent by the second core network, wherein the first connection identifier is a connection identifier between the second core network and the first access network device;
establishing, by the first access network device, a connection with the second core network based on the first connection identifier.

5. The method according to claim 1, further comprising:
sending, by the first access network device, first indication information to the terminal, wherein the first indication information is configured to indicate that the first core network is not able to provide network services to the terminal;
wherein the sending, by the first access network device, the handover request to the second core network comprises:
obtaining, by the first access network device, first response information sent by the terminal, and sending, by the first access network device, the handover request to the second core network.

6. The method according to claim 5, wherein the first access network device is the source access network device of the terminal, the first response information comprises related information of a second access network device, the second access network device is a target access network device of the terminal, and the second access network device is different from the first access network device;
the method further comprises:
sending, by the first access network device, the related information of the terminal to the second access network device that triggers the second access network device to send the handover request to the second core network.

7. The method according to any one of claims 1 to 6, wherein after the first access network device sends the handover request to the second core network, the method further comprises:
obtaining first handover acknowledgement information sent by the second core network, wherein the first handover acknowledgement information comprises user plane function tunnel information, and the user plane function tunnel information is used for the first access network device to establish a user plane tunnel with the second core network.

8. The method according to claim 7, further comprising:
releasing connection resources with the first core network.

9. The method according to claim 7, wherein the first handover acknowledgement information further comprises: second indication information, wherein the second indication information is configured to instruct the first access network device to send a handover command to the terminal;
the method further comprises:
sending, by the first access network device, the handover command to the terminal based on the second indication information, wherein the handover command is configured to indicate a handover reason and related information of the second core network;
obtaining, by the first access network device, second handover acknowledgement information sent by the terminal.

10. A handover processing method, comprising:
in a case where a first core network is not able to provide network services to a terminal, obtaining, by a second core network, a handover request sent by a first access network device;
determining, by the second core network, to perform a handover of the terminal's service from the first core network to the second core network based on the handover request;
wherein the first core network and the second core network respectively comprise different network nodes, and each of the network nodes supports one or more of a mobility management function, a session management function, or a user plane function.

11. The method according to claim 10, wherein the determining, by the second core network, to perform the handover of the terminal's service from the first core network to the second core network based on the handover request comprises:
updating, by the second core network, a PDU session of the terminal based on the handover request and sending first handover acknowledgement information to the first access network device, wherein the first handover acknowledgement information comprises a user plane function tunnel information, and the user plane function tunnel information is used for the first access network device to establish a user plane tunnel with the second core network.

12. The method according to claim 11, wherein after sending the first handover acknowledgement information to the first access network device, the method further comprises:
sending configuration update information to the terminal, wherein the configuration update information is configured to instruct the terminal to update a configuration of the PDU session;
obtaining a configuration update response sent by the terminal.

13. The method according to claim 10, wherein before the second core network performs the handover of the terminal's service from the first core network to the second core network based on the handover request, the method further comprises:
obtaining a connection update request sent by a third core network, wherein the connection update request is configured to instruct the second core network to establish a connection with the first access network device and the terminal respectively;
sending a connection update response to the third core network, wherein the connection update response comprises a first connection identifier and a second connection identifier; and
establishing a connection with the first access network device based on the first connection identifier and establishing a connection with the terminal based on the second connection identifier.

14. A handover processing apparatus, applied to a first access network device, comprising a memory, a transceiver, and a processor;
the memory is configured to store a computer program; the transceiver is configured to send and receive data under the control of the processor; the processor is configured to read the computer program from the memory to perform:
in a case where a first core network is not able to provide network services to a terminal, sending a handover request to a second core network, wherein the handover request is configured to request a handover of the terminal's service from the first core network to the second core network;
wherein the first core network and the second core network respectively comprise different network nodes, and each of the network nodes supports one or more of a mobility management function, a session management function, or a user plane function.

15. The apparatus according to claim 14, wherein the processor executes the program to further perform:
obtaining related information of the terminal from a source access network device of the terminal;
sending the handover request to the second core network based on the related information of the terminal.

16. The apparatus according to claim 14, wherein the processor executes the program to further perform:
obtaining a first connection identifier sent by the second core network, wherein the first connection identifier is a connection identifier between the second core network and the first access network device, and the first access network device is the source access network device of the terminal;
establishing a connection with the second core network based on the first connection identifier.

17. The apparatus according to claim 14, wherein the processor executes the program to further perform:
sending first indication information to the terminal through the transceiver, wherein the first indication information is configured to indicate that the first core network is not able to provide network services to the terminal, and the first access network device is the source access network device of the terminal;
obtaining first response information sent by the terminal and sending the handover request to the second core network through the transceiver.

18. The apparatus according to claim 17, wherein the first access network device is the source access network device of the terminal, the first response information comprises related information of a second access network device, the second access network device is a target access network device of the terminal, and the second access network device is different from the first access network device;
the processor executes the program to further perform:
sending the related information of the terminal to the second access network device that triggers the second access network device to send the handover request to the second core network.

19. The apparatus according to any one of claims 14 to 18, wherein the processor executes the program to further perform:
obtaining first handover acknowledgement information sent by the second core network, wherein the first handover acknowledgement information comprises user plane function tunnel information, and the user plane function tunnel information is used for the first access network device to establish a user plane tunnel with the second core network.

20. A handover processing apparatus, applied to a second core network, comprising a memory, a transceiver, and a processor;
the memory is configured to store a computer program; the transceiver is configured to transmit and receive data under the control of the processor; the processor is configured to read the computer program from the memory to perform:
in a case where a first core network is not able to provide network services to a terminal, obtaining a handover request sent by a first access network device;
determining to perform a handover of the terminal's service from the first core network to the second core network based on the handover request;
wherein the first core network and the second core network respectively comprise different network nodes, and each of the network nodes supports one or more of a mobility management function, a session management function, or a user plane function.

21. The apparatus according to claim 20, wherein the processor executes the program to further perform:
updating a PDU session of the terminal based on the handover request and sending first handover acknowledgement information to the first access network device, wherein the first handover acknowledgement information comprises user plane function tunnel information, and the user plane function tunnel information is used for the first access network device to establish a user plane tunnel with the second core network.

22. The apparatus according to claim 21, wherein the processor executes the program to further perform:
sending configuration update information to the terminal, wherein the configuration update information is configured to instruct the terminal to update a configuration of the PDU session;
obtaining a configuration update response sent by the terminal.

23. The apparatus according to claim 20, wherein the processor executes the program to further perform:
obtaining a connection update request sent by a third core network, wherein the connection update request is configured to instruct the second core network to establish connections with the first access network device and the terminal respectively;
sending a connection update response to the third core network, wherein the connection update response comprises a first connection identifier and a second connection identifier; and
establishing a connection with the first access network device based on the first connection identifier and establishing a connection with the terminal based on the second connection identifier.

24. A handover processing apparatus, applied to a first access network device, comprising:
a first processing unit, configured to, in a case where a first core network is not able to provide network services to a terminal, send a handover request to a second core network, wherein the handover request is configured to request a handover of the terminal's service from the first core network to the second core network;
wherein the first core network and the second core network respectively comprise different network nodes, and each of the network nodes supports one or more of a mobility management function, a session management function, or a user plane function.

25. A handover processing apparatus, applied to a second core network, comprising:
a first obtaining unit, configured to, in a case where a first core network is not able to provide network services to a terminal, obtain a handover request sent by a first access network device;
a second processing unit, configured to determine to perform a handover of the terminal's service from the first core network to the second core network based on the handover request;
wherein the first core network and the second core network respectively comprise different network nodes, and each of the network nodes supports one or more of a mobility management function, a session management function, or a user plane function.

26. A processor-readable storage medium, wherein the processor-readable storage medium stores a computer program, and the computer program is configured to cause the processor to perform the handover processing method according to any one of claims 1 to 9, or perform the handover processing method according to any one of claims 10 to 13.
